# EUROPEAN PATENT APPLICATION

(11) **EP 2 527 907 A1**
(43) Date of publication of application: **28.11.2012**
(21) Application number: 12169521.7
(22) Date of filing: 25.05.2012
(51) Int. Cl.: G02B 27/48

(54) **Laser Speckle Reduction for Imaging Systems**

(30) Priority: 27.05.2011 US 201161490936 P
(71) Applicant: Corning Inc., Corning, NY 14831 (US)
(72) Inventor: Cobb, Joshua Monroe, Victor, NY New York 14564 (US); Michaloski, Paul Francis, Rochester, NY New York 14620 (US)
(74) Representative: Isarpatent

(57) **Abstract**

A speckle reduction system includes an optical system and one or more beam steerers for directing light to successive off-axis areas around a diffuser and for reorienting and recentering distributions of the light from each of the successive off-axis areas of the diffuser along a common axis.

## Description

### CROSS-REFERENCE

This application claims the benefit of priority under 35 U.S.C. § 119 of U.S. Provisional Application Serial No. 61 /490936 filed oh May 27, 2011 the content of which is relied upon and incorporated herein by reference in its entirety.

### TECHNICAL FIELD

The invention treats speckle arising from the use of coherent light, such as produced by lasers, particularly for purposes of reducing the adverse effects of speckle on images captured by imaging systems.

### BACKGROUND

Optical imaging applications, such holography and interferometry, require highly coherent light for producing images. Speckle, which can degrade image quality, arises from the same phenomenon of interference that is exploited for purposes of image contrast. Any scattering of light within coherent imaging systems can produce local phase interactions resulting in seemingly random patterns of constructive and destructive interference that can obscure the desired interference patterns. Such scattering can arise from any number of sources including dust, imperfect imaging optics, and stray reflections, as well as from the object intended for imaging.

Although diffuser surfaces are often a source of speckle, diffuser surfaces have also been used to mitigate speckle by rotating the diffuser surfaces and exploiting the integration interval of image capturing devices (including the human eye) to average together the different resulting speckle patterns over time. Conventional speckle reduction systems focus the output beam of a laser onto a rotating diffuser plate. The diffuse focus on the plate forms a new spot source for the illumination system. The diameter of the diffuser plate at which the laser beam is focused and the rate at which the plate is rotated (together quantifiable as a local linear speed of the plate with respect to the focused beam) are adjusted so that speckle contrast is sufficiently reduced within the integration interval of a camera. Generally, speckle contrast is reduced by the square root of the number of uncorrelated speckle patterns within a given integration interval.

Rotating diffusers, particularly within precision optical devices, have some disadvantages, including the generation of heat and vibration. Ongoing demands for capturing images within shorter integration intervals of the cameras require the diffusers to be larger in diameter or rotated at higher speeds to maintain a desired amount of speckle reduction. The larger diffusers and higher speeds, as well as higher power motors, tend to increase undesirable heat and vibration, which can disturb desired imaging within the precision optical imaging devices.

The inventors have contemplated achieving speckle reduction by moving a beam instead of moving a diffuser to reduce mass and moment as well as the attendant heat and vibration. However, the varying off-axis illumination of the diffuser as collected and refocused on axis increases system etendue by only partially filling an exit pupil from each illuminated position and requires a complete rotation to progressively fill the pupil during the limited integration interval.

### SUMMARY

The invention in a preferred respect increases dynamic speckle diversity by steering a laser beam across (e.g., around) a diffuser and collecting the diffuse light in a reconstituted beam while maintaining concentric angular distributions of light in the reconstituted beam. Light collected from each position on the diffuser fills an exit pupil in a concentric form intended for use. For example, a laser beam can be directed onto on a steering mirror, which steers the beam for tracing a generally circular or spiraling path on a diffuser. Despite the offset of light through different spot positions about the diffuser, the system etendue can remain low because the off-axis distributions of light from the diffuser are recentered and realigned with respect to each other along a common optical axis. That is, instead of merely focusing the light from the different illuminated areas of the diffuser on axis, which fills different limited areas of a conjugate aperture stop, the off-axis distributions of light from each of the illuminated areas fill common areas of a conjugate aperture stop. At a conjugate to the diffuser, the centroids of energy are substantially recentered despite the different off-axis spot positions at which the light is collected from the diffuser. At an opposite conjugate to the diffuser, the centroids of energy are substantially realigned (except for any redistribution attributable to the diffuser itself) despite the different off-axis spot positions at which the light is collected from the diffuser.

For example, light collected from the diffuser can be returned to the same steering mirror or can be directed to a synchronous steering mirror to both recenter and realign the diffuse light. Preferably, either the diffuser itself has optical power or an intervening optic has power to redirect the diffuse light onto the same steering mirror or the synchronously driven steering mirror. Since the motion of the steering mirror is incidental to the speed of light, the diffuse light can be returned to the axis from which the light was initially steered.

The steering mirror, particularly if located at or near a focal point of the laser beam, can be both small in size and rotated about or nearly about the center of the steering mirror. By limiting the size of the beam steering mirror, thereby limiting its mass, and by effectively rotating the steering mirror near its center of mass, thereby limiting its moment, much less heat and vibration are generated. The overall speckle reduction system can be made more compact at a low cost and requires much less power to operate.

Since at each angular position of the steering mirror a desired overall angular distribution of light is maintained, the amount of rotation of the steering mirror with respect to a given integration interval of a camera can be selected to achieve a desired amount of speckle reduction rather than to first reconstruct a desired angular distribution of light over an entire cycle of rotation. Speckle reduction is achieved in two primary ways: first, by limiting spatial coherence, which limits the maximum separation between surface artifacts capable of producing speckle; and second, by averaging uncorrelated speckle patterns within the integration interval of the camera, which averages out the speckle. The diffuser itself, particularly if illuminated over a sufficient area, can reduce spatial coherence, and optics within the speckle reduction system preferably resolve the diffuser to preserve a range of angular diversity provided by the diffuser. The higher resolution also contributes to distinguishing one speckle pattern from another as the beam is tracked across the diffuser for uncorrelating the speckle patterns.

One version of the invention as a speckle reduction system for coherent light includes a diffuser, a beam steering system having at least one beam steerer, and an optical system interconnecting the diffuser and the beam steering system. The optical system directs light from the at least one beam steerer to successive off-axis areas of the diffuser and from the successive off-axis areas of the diffuser to the at least one beam steerer so that each of the angular distributions of the light from the successive off-axis areas of the diffuser is substantially centered and aligned with a common axis for exiting from the speckle reduction system.

The beam steerer (or each of a synchronously driven pair of beam steerers) can include a movable reflective surface, and the optical system can include a focusing optic that focuses the light onto the movable reflective surface for reflecting the light toward the successive off-axis areas of the diffuser. The same (or a different) focusing optic can focus the light from the successive off-axis areas of the diffuser onto the same or a different movable reflective surface for centering and aligning the distributions of the light from each of the successive off-axis areas of the diffuser with the common axis. Alternatively, the focusing optic can redirect and focus the light from the movable reflective surface onto the successive off-axis areas of the diffuser, and the same or the different focusing optic can collect and redirect the focused light from the diffuser onto the same or the different movable reflective surface.

Another version of the invention as a method of reducing speckle with a speckle reduction system includes directing coherent light along a first axis to a beam steerer, directing light from the beam steerer to successive off-axis areas of a diffuser, and directing the light from the successive off-axis areas of the diffuser to the same beam steerer or another beam steerer operated in synchronism so that angular distributions of the light from each of the successive off-axis areas of the diffuser are substantially centered and aligned with a second axis for exiting from the speckle reduction system.

The step of directing coherent light along the first axis to the beam steerer can include focusing the light on a movable reflective surface, the step of directing light from the beam steerer can include reflecting the light toward the successive off-axis areas of the diffuser, and the step of directing the light from the successive off-axis areas of the diffuser can include focusing the light from the successive off-axis areas of the diffuser onto the same movable reflective surface or onto another movable reflective surface that is movable in synchronism with the movable reflective surface for centering and aligning the distributions of the light from each of the successive off-axis areas of the diffuser with the second axis. Alternatively, the step of directing light from the beam steerer can include focusing the light from a movable reflective surface onto successive off-axis areas of the diffuser, and the step of directing the light from the successive off-axis areas of the diffuser can include collecting and directing the focused light from the diffuser onto the same movable reflective surface or onto another movable reflective surface that is movable in synchronism with the movable reflective surface for centering and aligning the distributions of the light from each of the successive off-axis areas of the diffuser with the second axis. While the referenced first and second axes can have various predefined relationships, the first and second axes are preferably coincident or at least coaxial for purposes such as simplifying the overall optical design.

### BRIEF DESCRIPTION OF THE DRAWING FIGURES

FIG. 1 is a schematic diagram of a Fizeau interferometer incorporating a conventional speckle reduction system.

FIG. 2 is a schematic diagram of a speckle reduction system in accordance with the invention in which an oscillating mirror is combined with a focusing optic for tracking a collimated beam around a reflective diffuser at nominal normal incidence.

FIG. 3 is a schematic diagram of another speckle reduction system in accordance with the invention in which an oscillating mirror is combined with a spherical reflective diffuser for tracking a diverging beam around the spherical reflective diffuser at nominal normal incidence.

FIG. 4 is a schematic diagram of another speckle reduction system featuring synchronously rotating mirrors that separately perform the functions of directing light to and from a diffuser.

FIG. 5 is a schematic diagram of another speckle reduction system similar to the speckle reduction system of FIG. 4 but providing for focusing light at opposite conjugates.

### DETAILED DESCRIPTION

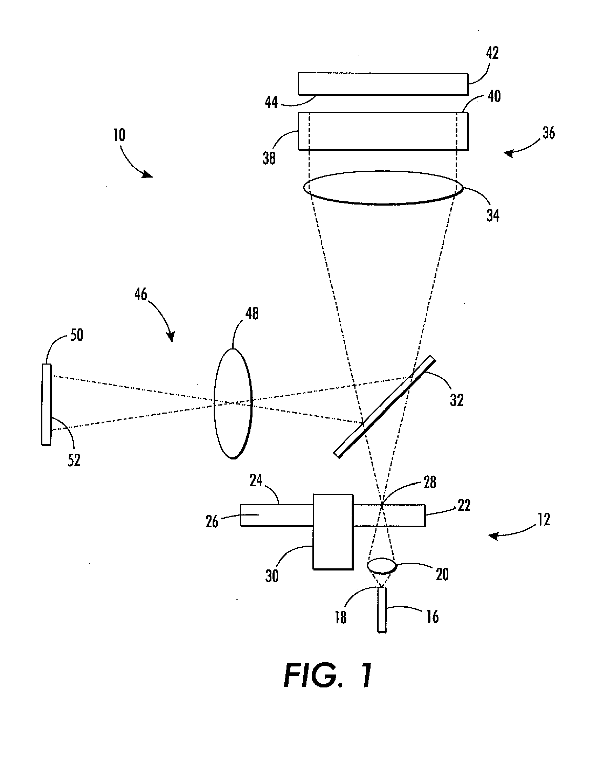

A Fizeau interferometer 10 shown in FIG. 1 incorporates a conventional speckle reduction system 12. The Fizeau interferometer 10 is purely illustrative, since virtually all coherent light source interferometers, as well as other coherent light source imaging systems, can benefit from similar speckle reduction systems.

A fiber end 16, presumably connected to a laser light source (not shown), provides an initial spot source 18 of coherent (temporal and spatial) illumination. A lens 20 focuses the output from the fiber end 16 onto a diffuser surface 24 of the diffuser disk 22. A body 26 of the diffuser is transmissive but light transmitted through the diffuser surface 24 is scattered through a wider range of angles, forming a new spot source. A motor 30 rotates the diffuser disk 22, preferably at a high speed so that the particular patterns of angular diversity of the new spot source 28 continuously vary.

After transmitting through a beamsplitter 32, a lens 34 collects diverging light emitted from the spot source 28 and collimates the collected light for transmission through a measurement arm 36 of the interferometer 10. A first portion of the collimated light is reflected from a reference surface 40 of a Fizeau optic 38 and a second portion of the light reflects from a test surface 44 of an object 42 intended for measurement. Light reflected from both the test surface 44 and the reference surface 40 transmits through the Fizeau optic 38 and is refocused by the lens 34 on a converging path towards the new spot source 28. However, the beamsplitter 32 redirects (i.e., reflects) the returning light into a recording arm 46 of the interferometer 10. A lens 48 within the recording arm 46 images the reference and test surfaces 40 and 44 onto a surface 52 of an image detector 50, such as a CCD (charge coupled device) and more generally referred to as a camera.

Any differences between the reference and test surfaces 40 and 44 generate interference fringes that can be evaluated for measuring surface height variations in the test surface 44 (the reference surface having a predetermined, e.g., flat surface). Any interference speckle generated within the interferometer 10 tends to degrade the image with spurious local effects. However, the influence of the speckle is reduced by rotating the diffuser disk 22 to randomize the speckle patterns apparent on the image detector surface 52. A rate at which the diffuser disk 22 is rotated is set in relation to the integration interval of the image detector 50 so that the variation in speckle patterns appearing on the image detector surface 52 is sufficient to mitigate the influence of speckle within each image that is successively captured by the image detector 50.

To increase variation in the speckle patterns for further mitigating speckle or to accommodate shorter integration intervals, both the rotational speed of the diffuser disk 22 or the radius of the diffuser disk 22 at which the new spot source 28 is formed can be increased. Both approaches have drawbacks including increased heat and vibration. The lens 20 can be translated along its axis to blur the focus on the diffuser surface 24 and enlarge the new spot source 28, thereby reducing spatial coherence.

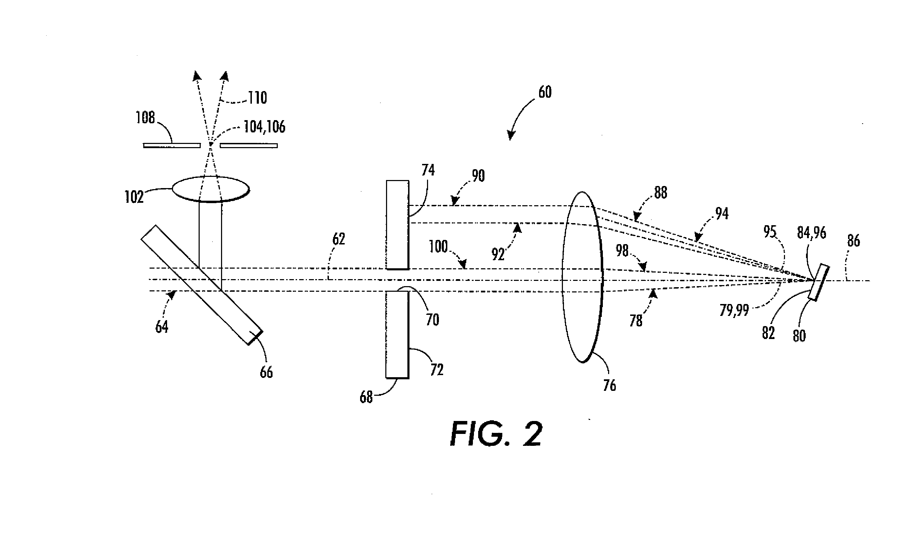

A version of the invention, as first embodied in a speckle reduction system 60 of FIG. 2, solves many of the problems associated with the above-described conventional speckle reduction system 12 of FIG. 1. Although only the speckle reduction system 60 is illustrated in FIG. 2, the speckle reduction system 60, as well as other new speckle reduction systems described infra, can be understood to provide a new spot source (e.g., 106) for a variety of coherent imaging systems subject to speckle.

A collimated beam 64 of coherent light from a laser source (not shown) propagates along an optical axis 62 through both a beamsplitter 66 and an aperture 70 through a reflective diffuser 68 to a first focusing optic 76, which focuses the collimated beam 64 as a converging beam 78 onto a reflective surface 82 of an oscillating mirror 80 (i.e., a steering mirror) at a focus 84. The oscillating mirror 80, which can be a microelectromechanical system (MEMS) device such as a Dual-Axis Analog MEMS Pointing Mirror TALP1000B from Texas Instruments, pivots the reflective surface 82 in synchronism about two axes (e.g., sinusoidally driven axes) for effectively rotating the reflective surface 82 about an axis 86 aligned with the optical axis 62. Under oscillation, the reflective surface 82 of the oscillating mirror 80 deflects (i.e., angularly reflects) the converging beam 78 as a diverging beam 88 on a different path back to the first focusing optic 76, which then recollimates the diverging beam 88 as a recollimated beam 90 parallel to but offset from the optical axis 62. The recollimated beam 90 illuminates an off-axis area 74 on a reflective diffuser surface 72 of the reflective diffuser 68 from which the recollimated beam 90 reflects as a diffuse collimated beam 92 back to the first reflective optic 76. The first reflective optic 76 focuses the diffuse collimated beam 92 as a diffuse converging beam 94 on the reflective surface 82 of the oscillating mirror 80 at a diffuse focus 96 overlying the initial focus 84. The size of the diffuse focus 96 is proportional to the diffusing angle of the diffuser surface 72. Although the focus 96 is diffuse and the reflective surface 82 of the oscillating mirror 80 is under motion (the latter discounted because of the speed of light), a centroid of energy 95 of the returning diffuse converging beam 94 is incident upon the reflective surface 82 of the oscillating mirror 80 at substantially the same angle at which the diverging 88 beam was originally nominally reflected from the reflective surface 82. As such, the reflective surface 82 of the oscillating mirror 80 reflects the diffuse converging beam 94 as a diffuse diverging beam 98 on a return path along the optical axis 62.

Thus, in the speckle reduction system 60, a centroid of energy 99 returned from the reflective diffuser 68 remains nominally centered and aligned with the optical axis 62 within the diffuse diverging beam 98 regardless of the angle through which the reflective surface 82 is tilted because the diffuse light from the reflective diffuser 68 returns to the reflective surface 82 substantially along its original path. Regardless of the spot position, e.g., off-axis area 74, on the diffuser surface 72 that illuminated, the diffuse converging beams 94 converge from different directions to the same diffuse focus 96, and the orientation of the reflective surface 82 necessarily changes with the directions from which the diffuse converging beams 94 converge. That is, the same orientations of the reflective surface 82 that control the directions at which the diverging beams 88 approach the reflective diffuser 68 also control the directions at which the diffuse converging beams 94 are reoriented as the overlying diffuse diverging beams 98. As a consequence, the centroids 99 of the diffuse diverging beams 98 are oriented substantially coincident with a centroid 79 of the converging beam 78 along the optical axis 62. At any single instant, some small fluctuations in the position and orientation of the centroids 99 with respect to the centroid 79 are possible due to the local characteristics of the reflective diffuser surface 72, but these fluctuations are largely imperceptible if the diffuser feature size is small in relation to the area 74 of the diffuser surface 72 that is instantly illuminated and tend to average out over the integration interval even for relatively larger feature sizes.

The first focusing optic 76 recollimates the diffuse diverging beams 98 as diffuse collimated beams 100 along the return path through the aperture 70 in the reflective diffuser 68 to the beamsplitter 66, where the diffuse collimated beams 100 are directed through a second focusing optic 102. Approaching the exit of the speckle reduction system 60, the second focusing optic 102 converges the diffuse collimated beams 100 through a diffuse focus 104, which is optically conjugate to both the initial focus 84 and the diffuse focus 96 on the reflective surface 82 of the oscillating mirror 80 but of opposite conjugacy to the diffuser surface 72 of the reflective diffuser 68. Each of the off-axis areas 74 on the reflective diffuser surface 72 remain conjugate to the aperture 70 of the reflective diffuser 68 regardless of the angular position of the off-axis areas 74 around the diffuser surface, and each of the diffuse collimated beams 100 originating from the different off-axis areas 74 of the diffuser surface 72 fills substantially common areas of the aperture 70.

The conjugate diffuse focus 104 forms a new spot source 106 for a coherent imaging system subject to speckle. An iris diaphragm 108 is positioned at the new spot source 106 to adjust the spatial coherence of a speckle-busting beam 110 exiting from the speckle reduction system 60. Relative to the numerical aperture of the speckle reduction system 60, the size of the iris diaphragm 108 can be decreased to increase the spatial coherence in accordance with the requirements of the subsequent imaging system.

The reflective surface 82 of the oscillating mirror 80 is preferably located at the rear focal point of the first focusing optic 76, and the diffuser surface 72 of the reflective diffuser 68 is preferably located at the front focal point of the first focusing optic 76 to perform the related focusing and collimating functions. Although the reflective surface 82 of the oscillating mirror 80 of this embodiment is preferably pivotable about two orthogonal axes, a first being located in or near the plane of the reflective surface 82 and a second being located in a transverse plane, the combined motions of the two pivot axes produce, in a main respect, rotation about the axis 86 in alignment with the optical axis 62. The additional freedom of a second axis, however, allows adjustment of a polar angle through which the reflective surface 82 is inclined to the optical axis 62. Thus, the diverging beam 88 that is reflected from the oscillating mirror 80 and recollimated as the collimated beam 90 by the first focusing optic 76 can be arranged to track around the diffuser surface 72 of the reflective diffuser 68 at different radii from the optical axis 62. For example, the collimated beam 90 could be arranged to track an oscillating spiral on the diffuser surface 72 to cover more area of the diffuser surface 72 so that the diffusion pattern does not repeat during each complete revolution. This capability can also be exploited to change diffusion characteristics. For example, the diffusion characteristics of the diffuser surface 72 can be progressively or incrementally varied with radial distance from the optical axis 62 and the collimated beam 90 can be adjusted to track at a particular radius exhibiting the desired diffusion characteristics.

Although the diffuser surface 72 of the reflective diffuser 68 preferably has a granular form for reflecting incident collimated light through a range of angles, the diffuser surface 72 can take a number of different forms for accomplishing this purpose and, as such, can be described as having a higher order surface profile of varying slope, including a higher order specular surface profile. The different beam angles through which the collimated beam 90 is locally reflected relatively vary the phase among rays in the general direction of beam propagation for varying field positions within which unwanted constructive interference (speckle) might occur. While the diffuser surface 72 can be directly incorporated into a reflector (forming a diffuse reflector), the functions of diffusion and reflection can be separated, such as by providing separate diffuse and reflective surfaces within the same optic or by providing such separate surfaces on different optics. Diffusion can also be provided within the body of a diffuser optic, such as a varying gradient index plate. For reducing speckle contrast by collecting the highest diffusion angles, the incoming beam 64 is preferably focused to a small spot focus 84 on the reflective surface 82. With the diffuser surface 72 and the reflective surface 82 at opposite conjugates, the angular limit of diffuse light reflected from the diffuser surface 72 is defined by an outer aperture of the reflective surface 82. The small spot focus 84 assures that the beam 90 incident upon the diffuser surface 72 is highly collimated, so that the angular distribution of light within the diffuse collimated beam 92 and the corresponding spatial distribution of light within the diffuse spot focus 96 on the reflective surface 82 are both more highly correlated with the diffusivity of the diffuser surface 72 for increasing the effective numerical aperture of the diffuse light collected by the reflective surface 82 from the diffuser surface 72.

Increasing the diffusion characteristics of the diffuser surface 72 (such as by shrinking grain size) increases the range of angles through which the diffuse collimated beam 92 is reflected from the reflective diffuser 68. The increased angular range of the returning diffuse beam 90 enlarges the size of the diffuse focus 96 on the reflective surface 82 of the oscillating mirror 80. Preferably, the reflective surface 82 of the oscillating mirror 80 is sized as small as possible to limit mass and moment, but large enough to accommodate the highest desired field angles intended to be captured from the reflective diffuser 68.

In addition to increasing the diffusion characteristics of the diffuser surface 72, speckle reduction can be maximized by rotating the reflective surface 82 of the oscillating mirror 80 as fast as possible at a maximum polar angle for tracking at the largest possible radius on the diffuser surface 72 so that the incident collimated beam 90 moves across the diffuser surface 72 at the highest possible linear velocity. The referenced oscillating mirror from Texas Instruments has a diameter of approximately 3 millimeters, a range of tilt about both axes of approximately plus or minus 5 degrees, and a rotational speed about the orthogonal optical axis 62 of approximately 130 hertz. Given the plus or minus 5 degrees through which the reflective surface 82 can be tilted, a range of reflected diverging beams 88 through nominal incline angles of plus or minus 10 degrees to the optical axis 62 is possible because of the angle doubling effects of specular reflection. The focal length of the first focusing optic 76 can be increased to increase the radius at which light tracks around the reflective diffuser at the maximum tilt angle of the reflective surface 82, but the correspondingly reduced numerical aperture reduces the range of angles through which the features of the diffuser surface 72 can be resolved (i.e., reduces the field angle range through which the diffusion pattern can be captured). Faster linear speeds increase the number of different speckle patterns that can be captured within a given integration interval and the larger field angles (if so captured) increase the ability to discriminate between different speckle patterns (i.e., the number of possible field positions over which speckle is resolvable increases).

In accordance with conventional practices, the beamsplitter 66 can be a polarizing beamsplitter that is used together with a quarter-wave plate (not shown) to minimize losses of light through encounters with the beamsplitter 66. For example, if the collimated light beam 64 originates as a linearly polarized beam, the polarization axis of the polarizing beamsplitter can be oriented to transmit the linearly polarized beam through the beamsplitter 66. However, the successive encounters of the collimated beams 64 and 100 through the quarter-wave plate rotate the polarization axis of the linearly polarized beam by 90 degrees, so that the polarizing beamsplitter reflects the returning diffuse collimated beams 100 along the separate pathway toward the exit of the speckle reduction system 60. Comparable polarizing beamsplitter arrangements can be made for discriminating between other polar orientations including circularly polarized light beams. Partial reflectivity and other known beam splitting approaches can also be used for effecting the propagation of beams into and out of the speckle reduction system 60.

Although the centroids 99 of the diffuse diverging beams 98 are preferably oriented coincident with the centroid 79 of the converging beam 78 along the optical axis 62, the centroid 99 of the diffuse diverging beams 98 could be oriented coincident to a different axis if the diffuse focus 96 of the diffuse converging beams 94 is relatively offset from the initial focus 84 of the converging beam 78. For example, if the diffuser surface 72 were to be slightly inclined so that the collimated beam 90 strikes the diffuser surface 72 at a non-normal angle of incidence, the diffuse focus 96 would be slightly shifted with respect to the focus 84. The resulting different pathways of the collimated beams 64 and 100 could be used to eliminate the beamsplitter 66 for separating these beams.

Although the reflective diffuser 68 is preferably fixed, the reflective diffuser 68 could also be rotated in the opposite direction to the tracking of the collimated beam 90 to add to the relative linear speed at which the collimated beam 90 is moved in relation to the diffuser surface 72.

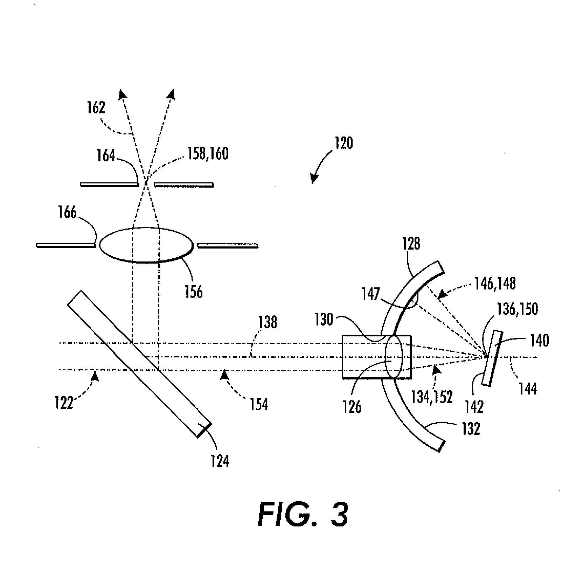

Another embodiment depicted in FIG. 3 incorporates some of the focusing functions of the focusing optic 76 into a spherical reflective diffuser 128. Similar to the preceding embodiment, an alternative speckle reduction system 120 receives a beam 122 of collimated light, which transmits through a beamsplitter 124 along an optical axis 138. A first focusing optic (e.g., lens) 126 located within (or at least near) an aperture 130 of the spherical reflective diffuser 128 focuses the collimated beam 122 as a converging beam 134 to an initial focus 136 on a reflective surface 142 of an oscillating mirror 140. At the instant angular orientation of the reflective surface 142 about an effective rotational axis 144 coincident with the optical axis 138, the converging beam 134 is reflected off axis as a diverging beam 146 incident upon the spherical reflective surface 128 at an off-axis area 147. The spherical reflective diffuser 128, which has a spherical reflective diffuser surface 132 centered at the initial focus 136, reflects the diverging beam 146 from the off-axis area 147 as a diffuse converging beam 148 toward a diffuse focus 150 nominally coincident with the initial focus 136. At the same instant angular orientation of the reflective surface 142, the diffuse converging beam 148 is reflected as a diffuse diverging beam 152 also nominally coincident with the converging beam 134.

Similar to the preceding embodiment, the oscillating mirror 140 functions as a beam steerer that tracks the diverging beam 146 across the spherical reflective diffuser surface 132 generally in a circular track derived from effective rotation of the reflective surface 142 about the rotational axis 144. However, the spherical shape of the diffuser surface 132 provides optical power for returning the reflected diffuse converging beam 148 to the reflective surface 142 at the diffuse focus 150.

Regardless of the angular orientation of the reflective surface 142 and the off-axis spot position at which the diffuser surface 132 is illuminated, the differently oriented diffuse converging beams 148 all return to the same diffuse focus 150. In addition and in view of the speed of light despite the intended motion of the reflective surface 142, the angular orientation of the reflective surface 142 through which an off-axis spot on the diffuser surface 132 is illuminated is the same angular orientation of the reflective surface 142 through which the diffuse light is collected in a common orientation. Due to the symmetric design of the speckle reduction system 120, energy centroids 147 of the individual diverging beams 146 match the centroids 149 of their instant counterpart diffuse converging beams 148, and upon reflection from the reflective surface 142, the diffuse converging beams 148 are converted into overlapping diffuse diverging beams 152 within which the centroids 149 of the diffuse converging beams 148 are commonly centered and aligned with the centroid 135 of the converging beam 134 along the optical axis 138.

The first focusing optic 126 collimates the diffuse diverging beams 1 52 as diffuse collimated beams 154, which are reflected by the beamsplitter 124 on a pathway toward an exit of the speckle reduction system 120. A second focusing optic 156 converges the diffuse collimated beams 154 through a diffuse focus 158, which forms a diffuse spot source 160 at the exit of the speckle reduction system 120 for a coherent imaging system subject to speckle. An iris diaphragm 164 surrounding the new spot source 160 adjusts the spatial coherence of a speckle-busting beam 162 exiting from the speckle reduction system 120. The diffuse focus 1 58 forming the new spot source 160 is optically conjugate to both the initial focus 136 and the diffuse focus 1 50 on the reflective surface 142 of the oscillating mirror 140. Thus, at each angular position of the reflective surface 142, the angular spatial fill of the iris diaphragm 164 remains substantially constant.

To establish optical conjugacy with each of the successive off-axis areas 147 of the diffuser surface 132, the second focusing optic 1 56 is preferably located at an optical distance from the first focusing optic 126 equal to twice the focal length of the first focusing optic 126. As such, each of the diffuse collimated beams 1 54 fills a substantially common area of an aperture 166 of the second focusing optic 156 as a conjugate to each of the illuminated off-axis areas 147 of the diffuser surface 132. Since the speckle-busting beam 162 has its intended overall form at each angular position of the reflective surface 142, the amount of rotation of the reflective surface 142 within a given integration interval of a camera of the intended imaging system can be set in accordance with the requirements for speckle reduction, without requiring the further consideration of beam reconstruction. Since the diffuse beams 154 are substantially collimated, considerable flexibility can be accommodated in the positioning of the second focusing optic 156 along the optical axis 186, although a larger optic may be needed.

The diffusion, reflection, and power functions of the spherical reflective diffuser 128 can be incorporated into a single surface or divided among multiple surfaces or optics. The oscillating mirror 140, which functions as a beam steerer, can be rotated (e.g., pivoted) about fewer or different axes. For example, at a given polar angle orientation, the reflective surface 142 can be rotated directly about the rotational axis 144.

Although dual-axis oscillating mirrors 80 and 140 are featured as the beam steerers in the previous embodiments, other forms of beam steerers can also be used. In an elementary sense, an inclined reflective surface can be rotated about a single axis (e.g., 86 or 144), such as by polishing an inclined surface at one end of a motor shaft. In place of movable mirrors, other beam steerers can be based on movable prisms, lenses, or diffraction gratings. In addition, beam steering can be accomplished by changing the refractive index of the medium through which the beam is transmitted. For example, acousto-optic modulators can be used as beam steerers.

The above-described embodiments employ a single beam steerer (e.g., oscillating mirror 80 or 140) for directing light both to and from successive off-axis areas of a diffuser (e.g., 68 or 128). However, a first beam steerer can be arranged for directing light to successive off-axis areas of a diffuser and a second beam steerer can be used for recentering and aligning the distributions of the light from each of the successive off-axis areas of the diffuser with a common axis. The first and second beam steerers are operated in synchronism so that the light that illuminates the successive off-axis areas of the diffuser through a first succession of instant beam angles is returned to a common axial orientation and position through a comparable succession of instant beam angles.

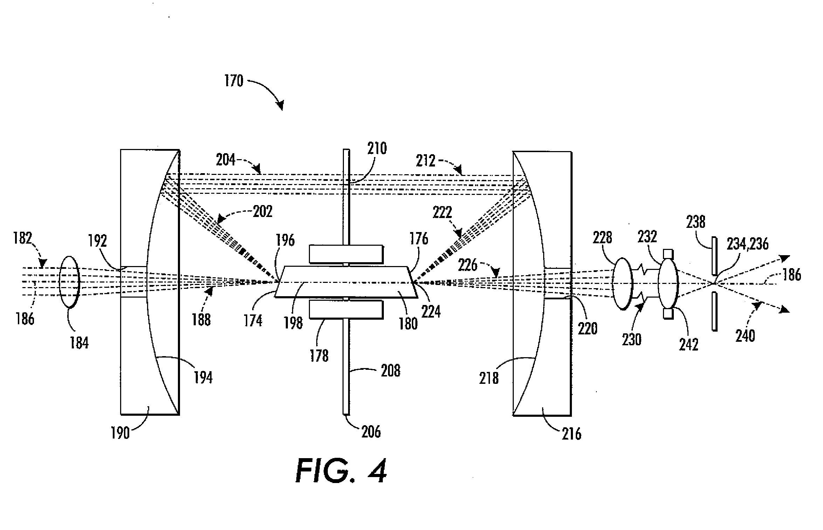

An embodiment shown in FIG. 4 depicts an example of a speckle reduction system 170 with two synchronized beam steerers in the form of two inclined reflective surfaces 174 and 176 at opposite ends of a common motor shaft 180. The speckle reduction system 170 receives a beam 182 of collimated light from a coherent light source (not shown). A first focusing optic (e.g., lens) 1 84 focuses the collimated beam 1 82 as a converging beam 188 along an optical axis 186. The converging beam 1 88 passes through an aperture 192 of a first reflective focusing optic 190 to a focal point 196 on the inclined reflective surface 174. The first focusing optic 184 can be positioned in various places along the optical axis 186, including within the aperture 192, to achieve the desired focusing properties. The reflective surface 1 74, which is formed as an inclined surface at one end of the motor shaft 180, is rotated by a motor 178 together with the motor shaft 180 about an axis 198 coincident with the optical axis 186.

At the instant angular orientation of the reflective surface 1 74, the converging beam 188 reflects from the reflective surface 174 as an off-axis diverging beam 202 incident upon a reflective surface 194 of the first reflective focusing optic 190. Preferably, the reflective surface 1 94 of the first reflective focusing optic 190 has a parabolic shape (at least in the areas, i.e., annular zone, intended for illumination) and a geometric focus coincident with the optical focus 196 on the reflective surface 174 of the rotating shaft 180. As such, the diverging beam 202 is reflected from the parabolic reflective surface 194 as a collimated beam 204 propagating parallel to but offset from the optical axis 186. A transmissive diffuser 206 having one or more diffuser surfaces 208 oriented normal to the optical axis 186 converts the collimated beam 204 into a diffuse collimated beam 212. A second reflective focusing optic 216, which preferably includes a similar parabolic reflective surface 218, reshapes the diffuse collimated beam 212 upon reflection into a diffuse converging beam 222. A diffuse focus 224 of the diffuse converging beam 212, which is coincident with the geometric focus of the parabolic reflective surface 218, is formed on the reflective surface 176 at an opposite end of the motor shaft 180. The reflective surface 176 is oriented at any instant rotational position of the motor shaft 180 similar to the orientation of the reflective surface 1 74 and reflects the diffuse converging beam 222 as a diffuse diverging beam 226 along the optical axis 186. Paralleling the first reflective focusing optic 190, the second reflective focusing optic 216 includes an aperture 220 through which the diffuse diverging beam 226 propagates toward an exit of the speckle reduction system 170. A second focusing optic 228 collimates the diffuse diverting beam 226 as a diffuse collimated beam 230 propagating along the optical axis 186.

As the shaft 180 is rotated by the motor 178, the off-axis collimated beam 204 tracks successive areas 210 across the diffuser surface 208 forming an annular path around the transmissive diffuser 206. Each successive off-axis area 210 along the annular path generates a different diffusion pattern within the corresponding succession of the diffuse collimated beams 212. Either the motor shaft 180 or the end mountings of the reflective surfaces 174 and 176 can be changed to track the collimated beam 204 around the transmissive diffuser 206 at a different radius (i.e., distance from the optical axis 186).

Approaching the exit of the speckle reduction system 170, a third focusing optic 232 converges the diffuse collimated beams 230 through a diffuse focus 234, which forms a new spot source 236 at the exit of the speckle reduction system 170 for a coherent imaging system subject to speckle. An iris diaphragm 238 surrounding the new spot source 236 adjusts the spatial coherence of a speckle-busting beam 240 exiting from the speckle reduction system 170. The diffuse focus 234 (new spot source 236) is optically conjugate to both the initial focus 196 on the first reflective surface 174 and the diffuse focus 224 on the second reflective surface 1 76 but of opposite conjugacy to the diffuser surface 208 of the transmissive diffuser 206. An aperture 242 of the third focusing optic 232, however, is preferably conjugate to each of the off-axis areas 210 on the diffuser surface 208, and as such, each of the diffuse collimated beams 230 originating from different off-axis areas 210 of the diffuser surface 208 fills substantially common areas of the aperture 242 in the overall form intended for the speckle-busting beam 240. The diffuse collimated beams 230 are shown as broken lines to allow for the additional optical distance actually required to locate the third focusing optic 232 together with its aperture 242 in a position along the optical axis 186 conjugate to the off-axis areas 210 of the diffuser surface 208. Since the diffuse beams 230 are substantially collimated, considerable flexibility can be accommodated in the positioning of the third focusing optic 232 along the optical axis 186, especially if the third focusing optic 232 can be enlarged in size.

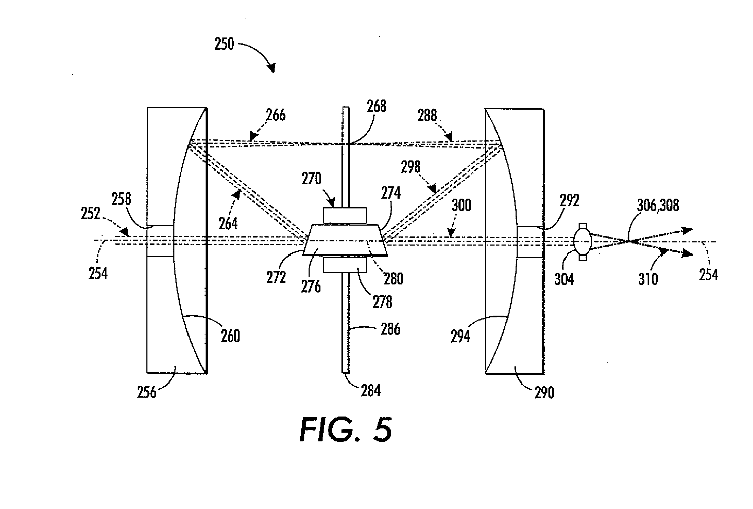

Another speckle reduction system 250 as shown in FIG. 5 contains elements similar to the speckle reduction system 170 but is arranged optically with reversed conjugates. A collimated beam 252 from a coherent light source (not shown) propagates along an optical axis 254 through an aperture 258 of a first reflective focusing optic 256 and is incident upon a reflective surface 272 of a beam steerer 270. Similar to the embodiment of FIG. 4, the beam steerer 270 is formed by two mutually inclined reflective surfaces, i.e., the reflective surface 272 and another reflective surface 274, at opposite ends of a motor shaft 276 that is rotated by a motor 278 about an axis 280 coincident with the optical axis 254. Due to the incline of the reflective surface 272, the collimated beam 252 is reflected off axis as a similarly collimated beam 264 that is incident upon a reflective surface 260 of the first reflective focusing optic 256. Preferably, the reflective surface 260 has the form of a paraboloid or at least approximately matches a paraboloid in the zone swept by the collimated beam 264 through the rotation of the inclined reflective surface 272 about the coincident motor and optical axes 280 and 254. The inclined reflective surface 272 is preferably located at the geometric focus of the referenced paraboloid, so that the off-axis collimated beam 264 is reflected from the parabolic reflective surface 260 as a beam 266 that propagates parallel to the optical axis and converges through a focus 268 on a diffuser surface 286 of a transmissive diffuser 284. The position of focus 268 at a focal length from the parabolic reflective surface 260 is derived from the local curvature of the illuminated off-axis parabolic section of the parabolic reflective surface 260 and sets the spacing between the parabolic reflective surface 260 of the first reflective focusing optic 256 and the diffuser surface 286 of the transmissive diffuser 284. Other inclinations of the reflective surface 174 would require a different spacing between the parabolic reflective surface 260 and the diffuser surface 286 in accordance with the focal lengths of different illuminated off-axis parabolic sections of the parabolic reflective surface 260.

Upon propagation through the best focus position 268, the beam 266 emerges from the transmissive diffuser 284 as a diffuse diverging beam 288, which is incident upon a similar parabolic reflective surface 294 of a second reflective focusing optic 290. The parabolic reflective surface 294 nominally collimates the diffuse diverging beam 288 as a diffuse collimated beam 298 in a direction incident upon the inclined reflective surface 274 of the beam steerer 270. The diffuse collimated beam 298 reflects from the inclined reflective surface 274 in the direction of the optical axis 254 as a diffuse collimated beam 300. The inclined reflective surface 274 is preferably located at a geometric focus of the parabolic reflective surface 294, and the parabolic reflective surface 294 is preferably spaced from the focus 268 on the diffuser surface 286 at the focal length of the illuminated off-axis parabolic section of the parabolic reflective surface 294.

Rotation of the motor shaft 276 rotates the two inclined reflective surfaces 272 and 274 synchronously about the optical axis 254 tracking the focus 268 of the converging beam 266 along an off-axis annular path around the transmissive diffuser 286 while realigning, recentering, and recollimating the diffuse diverging beams 288 emanating from the transmissive diffuser 286 as a succession of diffuse collimated beams 300 along the optical axis 254. The diffuse collimated beams 300 propagate through an aperture 292 in the reflective focusing optic 290 toward an exit of the speckle reduction system 250.

A focusing optic 304 converges the diffuse collimated beams 300 through a diffuse focus 306, which can function as a new spot source 308 for a speckle-busting output beam 310. In contrast to the preceding embodiments, the diffuse focus 306 and new spot source 308 are conjugate to the diffuse focus 268 on the transmissive diffuser 286. As such, the new spot source 308 retains a high spatial coherency, and an iris diaphragm is generally not needed to further increase spatial coherence. The original collimated beam 252 can be defocused to reduce spatial coherence.

Since the diffuse focus 268 occupies at any one instant only a small area of the diffuser surface 286, minor fluctuations can be expected in the orientation of the energy centroids within the conjugate diffuse focus 306 of the new spot source 308 in accordance with the local slope of the diffuser surface 286. These fluctuations in the orientation of the centroids within the diffuse focus 306 and new spot source 308 are generally small in comparison to the angles through which the diffuse collimated beams 298 are inclined to the optical axis 254 on approach to the reflective surface 274. In addition, since the area of the diffuser surface 286 that is illuminated at any one instant is so small, only a small tracking distance across the diffuser surface 286 is required to produce an uncorrelated fluctuation in the orientation of the energy centroid. Thus, over intervals covering tracking ranges as short as the original beam diameter, the average slope of the diffuser surface is zero and the energy centroids of the diffuse beams 300 measurable over each of the intervals remain centered within the diffuse focus 306 and new spot source 308.

That is, although the diffuser 206 can influence instant spatial or angular distributions of light, as is the nature of diffusers, the remainder of the speckle-reducing system 250 responsible for the instant off-axis illuminations of the diffuser 206 does not as a consequence of its overall nature necessarily affect angular or spatial distributions of light propagating through the speckle-reducing system 250. Thus, the desired filling of the exit pupil of the speckle-reducing system 250, as, for example, an image of the aperture of the light source, is not compromised by the off-axis illumination of the diffuser 206, and as a result, the overall etendue of speckle-reducing system 250, like the speckle-reducing systems 60, 120, and 170 of the preceding embodiments, can remain low.

Although the reflective focusing optics 190, 216 and 256, 290 of the two immediately preceding embodiments are described as having parabolic reflective surfaces 194, 218 and 260, 294, the reflective surfaces can take a variety of other forms including spherical or aspherical overall forms or local surfaces of revolution along the reflective pathways illuminated by the steered beams 202 and 264. In place of or in addition to the transmissive diffuser 206 or 284, one or both of either pair of reflective surfaces 194, 218 and 260, 294 can be formed as a diffuse reflective surface. In addition, the transmissive diffusers 206 and 284 can be formed as reflective diffusers, requiring only a single beam steerer and reflective (parabolic) optic to redirect the diffuse off-axis beams along a common path back toward the light source. A beamsplitter similar to the beamsplitters 66 and 124 can be used for directing the returning diffuse beams toward an exit.

The form in which the beams are intended for reflection from the synchronously rotated reflective surfaces can be varied between the focused and unfocused examples. The focused forms allow for use of smaller reflective surfaces, while the unfocused forms allow for focusing onto the diffuser.

The synchronously driven reflective surfaces, as well as other forms of beam steerers (e.g., acousto-optical beam steerers), can be physically separated but synchronized electronically, such as by using the same or synchronized drivers. Beam steering pairs operated in transmission can be used together with focusing optics also used in transmission.

The invention having been described with respect to certain embodiments, including as currently preferred, those of skill in this art will appreciate that the invention can be embodied in many more forms in accordance with the overall teaching of the invention. The speckle-busting beams referenced as the output of the speckle reduction systems described herein are expected to be particularly useful for coherent imaging systems but may also be used in other systems that can benefit from speckle reduction or similarly varying beam compositions.

## Claims

1. A speckle reduction system for coherent light comprising:
a diffuser,
a beam steering system having at least one beam steerer and a first axis,
an optical system interconnecting the diffuser and the beam steering system for directing light via the at least one beam steerer to successive off-axis areas of the diffuser and from the successive off-axis areas of the diffuser to the at least one beam steerer so that angular distributions of the light from the successive off-axis areas of the diffuser are substantially centered and aligned with a second axis for exiting from the speckle reduction system.

2. The system of claim 1 in which the optical system includes at least one focusing optic that (a) directs the light via the at least one beam steerer toward the successive off-axis areas of the diffuser and (b) directs the light from the successive off-axis areas of the diffuser to the at least one beam steerer for centering and aligning the distributions of the light from the successive off-axis areas of the diffuser with the second axis.

3. The system of claim 2 in which the at least one beam steerer includes a first beam steerer, the at least one focusing optic includes a first focusing optic, and the first focusing optic directs the light via the first beam steerer toward the successive off-axis areas of the diffuser and directs the light from the successive off-axis areas of the diffuser to the first beam steerer.

4. The system of claim 2 in which the at least one beam steerer includes a first beam steerer and a second beam steerer that is operated in synchronism with the first beam steerer, and the at least one focusing optic includes a first focusing optic that directs the light via the first beam steerer toward the successive off-axis areas of the diffuser and a second focusing optic that directs the light from the successive off-axis areas of the diffuser to the second beam steerer.

5. The system of claim 2 in which the at least one beam steerer includes a movable reflective surface and the at least one focusing optic includes a first focusing optic having a parabolic reflective surface with a geometric focus on the movable reflective surface.

6. The system of claim 1 in which the at least one beam steerer includes at least one movable reflective surface and the optical system includes at least one focusing optic that (a) focuses the light onto the at least one movable reflective surface for reflecting the light toward the successive off-axis areas of the diffuser and (b) focuses the light from the successive off-axis areas of the diffuser onto the at least one movable reflective surface.

7. The system of claim 6 in which the at least one movable reflective surface includes first and second movable reflective surfaces that are driven in synchronism, the at least one focusing optic includes a first focusing optic that focuses the light onto the first movable reflective surface for reflecting the light toward the successive off-axis areas of the diffuser and a second focusing optic that focuses the light from the successive off-axis areas of the diffuser onto the second movable reflective surface.

8. The system of claim 1 in which the at least one beam steerer includes at least one movable reflective surface and the optical system includes at least one focusing optic that (a) focuses the light from the at least one movable reflective surface onto the successive off-axis areas of the diffuser and (b) collects the light from the successive off-axis areas of the diffuser and directs the collected light onto the at least one movable reflective surface.

9. The system of claim 1 in which the diffuser is a reflective diffuser having a curvature that contributes optical power to the optical system and reflects light from the successive off-axis areas of the diffuser to the at least one beam steerer.

10. The system of claim 1 in which the angular distributions of the light from the successive off-axis areas of the diffuser have respective centroids of energy that are oriented on approach to the at least one beam steerer through range of different directions, and the at least one beam steerer centers and aligns the centroids of energy with the second axis.

11. The system of claim 1 in which different off-axis areas of the diffuser have different diffusing characteristics and the at least one beam steerer is controllable to selectively direct light to the different off-axis areas.

12. A method of reducing speckle with a speckle reduction system comprising the steps of:
directing coherent light along a first axis to a beam steerer,
directing light from the beam steerer to successive off-axis areas of a diffuser, and
directing the light from the successive off-axis areas of the diffuser to one of (a) the beam steerer and (b) another beam steerer so that angular distributions of the light from the successive off-axis areas of the diffuser are substantially centered and aligned with a second axis for exiting from the speckle reduction system.

13. The method of claim 12 in which the step of directing coherent light along the first axis to the beam steerer includes directing the light onto a first movable reflective surface, the step of directing light from the beam steerer includes reflecting the light from the first movable reflective surface toward the successive off-axis areas of the diffuser, and the step of directing the light from the successive off-axis areas of the diffuser includes directing the light from the successive off-axis areas of the diffuser onto one of (a) the first movable reflective surface and (b) a second movable reflective surface that is movable in synchronism with the first movable reflective surface for centering and aligning the distributions of the light from the successive off-axis areas of the diffuser with the second axis.

14. The method of claim 13 in which the step of directing the light from the successive off-axis areas of the diffuser includes directing the light from the successive off-axis areas of the diffuser onto the first movable reflective surface.

15. The method of claim 13 in which the step of directing the light from the successive off-axis areas of the diffuser includes directing the light from the successive off-axis areas of the diffuser onto the second movable reflective surface that is movable in synchronism with the first movable reflective surface.

16. The method of claim 13 in which the step of directing coherent light along the first axis to the beam steerer includes focusing the light onto the first movable reflective surface, and the step of directing the light from the successive off-axis areas of the diffuser includes focusing the light from the successive off-axis areas of the diffuser onto one of (a) the first movable reflective surface and (b) the second movable reflective surface.

17. The method of claim 12 in which the step of directing light from the beam steerer to successive off-axis areas of a diffuser includes focusing the light onto the diffuser.

18. The method of claim 12 in which the step of directing the light from the successive off-axis areas of the diffuser includes reorienting and recentering centroids of angular distributions of the light from the successive off-axis areas of the diffuser along the second axis.

19. The method of claim 12 including a step of filling an aperture conjugate to the diffuser, wherein each of the angular distributions of the light from the successive off-axis areas of the diffuser fills a substantially common area of the conjugate aperture.

20. The method of claim 12 in which the step directing light from the beam steerer to successive off-axis areas of a diffuser includes selectively directing the light to different off-axis areas of the diffuser having different diffusing characteristics.
